# EUROPEAN PATENT APPLICATION

(11) **EP 1 895 407 A1**
(43) Date of publication of application: **05.03.2008**
(21) Application number: 07015618.7
(22) Date of filing: 08.08.2007
(51) Int. Cl.: G06F 9/44

(54) **HMI development support apparatus, HMI development support method and HMI development support program**

(30) Priority: 09.08.2006 JP 2006216766
(71) Applicant: Hitachi, Ltd., Chiyoda-ku Tokyo 100-8280 (JP)
(72) Inventor: Atarashi, Yoshitaka, Chiyoda-ku Tokyo 100-8220 (JP); Kujirai, Toshihiro, Chiyoda-ku Tokyo 100-8220 (JP); Doi, Keiji, Chiyoda-ku Tokyo 100-8220 (JP); Fukaya, Naohiko, Chiyoda-ku Tokyo 100-8220 (JP)
(74) Representative: Beetz & Partner

(57) **Abstract**

A HMI (Human Machine Interface) development support apparatus 1 that has at least a CPU, memory devices, a display unit and an input device and supports development of a display screen regarding a HMI of an information processing system includes a layout editing means 10 that creates a layout of the display screen regarding the HMI of the information processing system in such a manner that the layout editing means 10 lays out at least either a graphic component having graphic data or an image component having image data based on operational information input from the input device; an image editing means 20 that creates an image for either the graphical component or the image component based on the operational information input from the input device; and data storage means 30 that stores layout data of the layout created by the layout editing means 10, component data of components included in the layout and image data of the components.

## Description

### BACKGROUND OF THE INVENTION

The present invention relates to a HMI development support apparatus, a HMI development support method and HMI development support programs that are suitable for a development of a human machine interface (hereinafter referred to as "HMI") in an in-car navigation system.

### FIELD OF THE INVENTION

A HMI in a navigation system, particularly if it is a genuine product manufactured by a vehicle manufacturer, is uniquely designed for each car type by the vehicle manufacturer, and required functions on an in-car navigation has become more complicated year by year. Consequently, this increases an implement cost in a HMI development, which brings a tremendous burden to a vehicle manufacturer and an in-car navigation system manufacturer.

Not limited to in such a car-navigation system, but generally in a HMI development, a so-called "layout editor" is used, as disclosed in Patent document 1, for example.

Such a layout editor is designed to facilitate a user's configuration of a display screen image simply by arranging (laying out) standard display components such as buttons or frames that are previously prepared. In addition, a layout editor also includes a display transition editor for designing or monitoring a transition relation between a button to be laid out and a display screen when the button is clicked on.

Such a layout editor allows an engineer who develops a HMI to efficiently implement a high-functional HMI in a system; that is, significantly contributes to implementation cost reduction in a HMI development.

[Patent document 1] JPA 2003-114793

Nevertheless, such an implementation cost in a HMI development is still a great burden on a vehicle manufacturer and an in-car navigation system manufacturer, due to following reasons.

When a HMI of an in-car navigation system is developed, more importance is put not only on functional or utility designs thereof, but also on aesthetic features of display screen images and unique designs thereof. These aesthetic features of display screen images and unique designs thereof are key points to discriminate their products from others of rival manufacturers. For the above reasons, display components such as buttons and frames that are used in a display screen image of an in-car navigation system are usually developed by a graphic designer who has a keen esthetic sense.

A graphic designer designs those display components by using an image editor such as Photoshop^{™}. When those display components are designed, no common database for those display components is used between a layout editor and an image editor. Consequently, an image designer has to perform tedious operations when he or she handles image data merely between the two different editors. When display components are associated with each other between the both editors, it is likely to occur misunderstanding or mistakes between different users of the layout editor and the image editor, resulting in insufficient data management of display components.

Conventionally, there have been provided no operational functions that are sufficiently interactive between a layout editor and an image editor, and various different users use those editors, resulting in increase in time of configuration and design of display screens. This is one of the major problems that hinder reduction in implementation cost in a HMI development.

In the light of the above mentioned problems, it has been desired to provide a HMI development support apparatus, a HMI development support method and a HMI development support program that are capable of enhancing operationability of interactive functions between a layout editor and an image editor, and of reducing an implement cost in a HMI development.

### SUMMARY OF THE INVENTION

In one aspect of the present invention, there is provided a HMI (Human Machine Interface) development support apparatus that includes at least a CPU, memory devices, a display unit and an input device and supports development of a display screen regarding a HMI of an information processing system, and the apparatus includes a layout editing means that creates a layout of the display screen regarding the HMI of the information processing system in such a manner that the layout editing means lays out at least either a graphic component having graphic data or an image component having image data based on operational information input from the input device; an image editing means that creates an image for either the graphical component or the image component based on the operational information input from the input device; and data storage means that stores layout data of the layout created by the layout editing means, component data of components included in the layout and image data of the components.

The image editing means imports the layout data of the layout that is created by the layout editing means and that is stored on the data storage means; creates image data of a component whose component data included in the imported layout data, based on operational information that is input from the input device when necessary; and stores the created image data of the component that is stored on the data storage means and updates the layout data and the component data that are stored on the data storage means.

In another aspect of the present invention, there is provided a HMI development support method for a HMI development support apparatus that includes at least a CPU, memory devices, a display unit and an input device and that supports development of a display screen regarding a HMI of an information processing system. The method include a layout editing step of creating a layout of a display screen regarding the HMI of the information processing system in such a manner that the layout editing means lays out at least either a graphic component having graphic data or an image component having image data, based on operational information input from the input device; an image editing step of creating an image of either the graphical component or the image component, based on operational information input from the input device; and a data storing step of storing layout data of the layout created by the layout editing means, component data of components included in the layout and image data thereof.

The image editing step includes importing the layout data of the layout that has been created and stored on the memory devices in the layout editing step; creating image data of components whose component data are included in the imported layout data based on the operational information input from the input device when necessary; and storing the created image data of the components on the memory devices and updating the layout data and the component data that have been stored on the memory devices.

### BRIEF DESCRIPTION OF THE DRAWINGS

Fig. 1 shows an example of a configuration of functional blocks of a HMI development support apparatus according to an embodiment of the present invention.
Fig. 2 shows example of a display screen image that is displayed by the layout editor 20 according to the embodiment of the present invention.
Fig. 3 shows a process flow of reading a project on a layout editor according to the embodiment of the present invention.
Fig. 4 shows a process flow of displaying the read layout on the layout editor according to the embodiment of the present invention.
Fig. 5 shows an example of a structure of a project management table according to the embodiment of the present invention.
Fig. 6 shows an example of a structure of a layout management table according to the embodiment of the present invention.
Fig. 7 shows an example of a structure of a component management table according to the embodiment of the present invention.
Fig. 8 shows an example of a structure of an image management table according to the embodiment of the present invention.
Fig. 9 shows an example of a structure of a string management table according to the embodiment of the present invention.
Fig. 10 shows an example of a display screen image in a layout import process that is displayed by the image editor according to the embodiment of the present invention.
Fig. 11 shows an example of a flow of the layout import process on the image editor according to the embodiment of the present invention.
Fig. 12 shows an example of a display screen of a day image of "TEL No. Input Display Screen" that has been designed on the image editor according to the embodiment of the present invention.
Fig. 13 shows an example of a display screen of a night image of "TEL No. Input Display Screen" that has been designed on the image editor according to the embodiment of the present invention.
Fig. 14 shows an example of a component registry window that is displayed by the image editor according to the embodiment of the present invention in a component registry process.
Fig. 15 shows an example of a flow of the component registry process on the image editor according to the embodiment of the present invention.
Fig. 16 shows an example of the component management table on which an image-edited component has been added in the component registry process on the image editor according to the embodiment of the present invention.
Fig. 17 shows an example of the image management table on which the image-edited component has been added in the component registry process on the image editor according to the embodiment of the present invention.
Fig. 18 shows an example of an update confirmation window for confirming that the layout has been updated on the layout editor according to the embodiment of the present invention.
Fig. 19 shows an example of the update confirmation window for confirming that the component has been updated on the layout editor according to the embodiment of the present invention.
Fig. 20 shows an example of a display screen image that is displayed on the layout editor according to the embodiment of the present invention, after the above-mentioned confirmations of the updates are made.
Fig. 21 shows an example of a flow of an update confirmation process on the layout editor according to the embodiment of the present invention.

### DESCRIPTION OF SPECIFIC EMBODIMENT

With reference to drawings, there will be provided descriptions on an embodiment of the present invention.

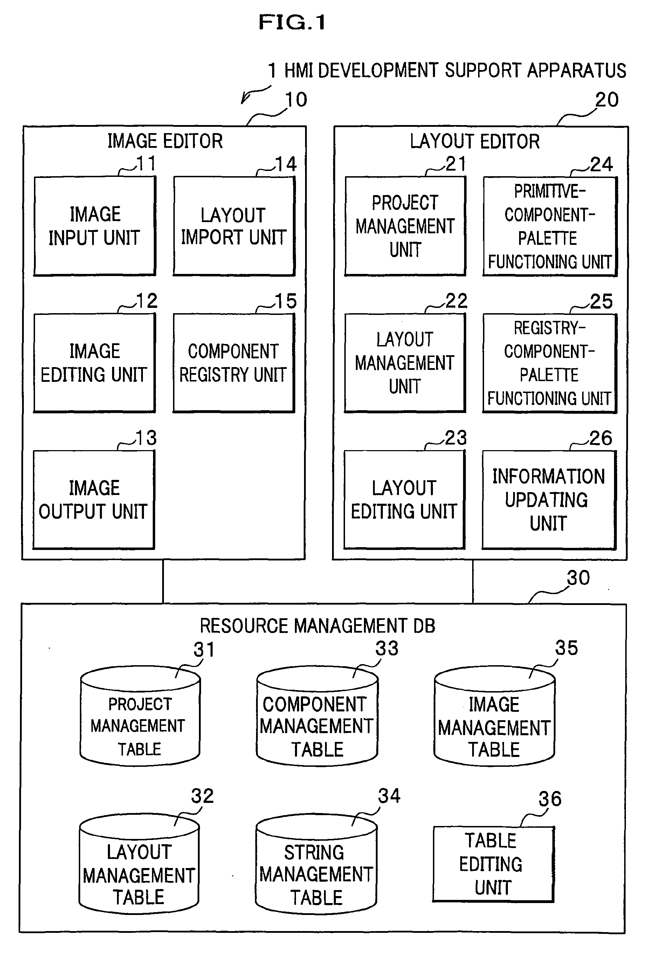

Fig. 1 shows an example of a configuration of functional blocks of a HMI development support apparatus according to the embodiment of the present invention. As shown in Fig. 1, the HMI development support apparatus 1 includes an image editor 10, a layout editor 20 and a resource management DB (database) 30 (also referred to as "data storage means").

The image editor 10 serves as a image editing means, and includes an image input unit 11, an image editing unit 12 and image output unit 13 that are primary functional blocks of the image editor, as well as a layout import unit 14 and a component registry unit 15. The layout editor 20 serves as a layout editing means, and includes a project management unit 21, a layout management unit 22, layout editing unit 23, a primitive-component-palette functioning unit 24, a registry-component-palette functioning unit 25 that are primary functional blocks of the layout editor, as well as an information updating unit 26. The resource management DB 30 includes various tables such as a project management table 31, a layout management table 32, a component management table 33, a string management table 34 and an image management table 35, as well as a table editing unit 36 and the like as functional blocks.

The HMI development support apparatus 1 as constituted above is embodied by using a computer including a CPU (central processing unit) that performs various calculations and programs, memory devices that store the programs and data, an input device that inputs data necessary for the CPU to execute the programs, and a display unit that displays results of execution of the programs by the CPU. Specifically, each function of the functional blocks shown in Fig. 1 is realized when the CPU of the computer executes an appropriate program stored on the memory devices. Each function of the functional blocks will be described later in the descriptions of the present embodiment when necessary.

The memory devices included in the computer usually include non-volatile memory devices such as a RAM (random access memory) and non-volatile memory devices such as a hard disk drive and flash memories. Those memory devices store the programs that the CPU executes, operational data necessary for the CPU to execute the programs, data of the various management tables in a resource management DB 30, and the like. The resource management DB 30 is a so-called relational data base, in which data-sharing type data that is managed in a tree data structure is stored in a XML format (Extensible Markup Language). Detailed examples thereof are shown in the drawings.

In the present embodiment, the HMI development support apparatus 1 is exemplified to be embodied by a singular computer. However, the present invention is not limited to this, and the apparatus 1 may be embodied by plural computers. For example in Fig 1, each function of the image editor 10, the layout editor 20 and resource management DB 30 may be realized by a separate computer, which are connected with each other via a communication network, and those plural computers may embody the HMI development support apparatus 1.

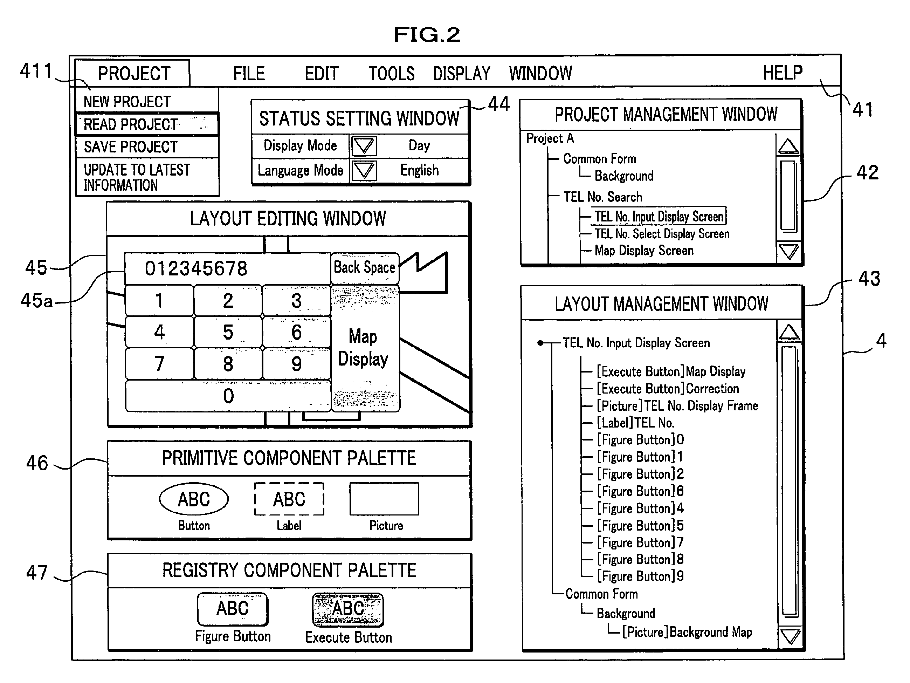

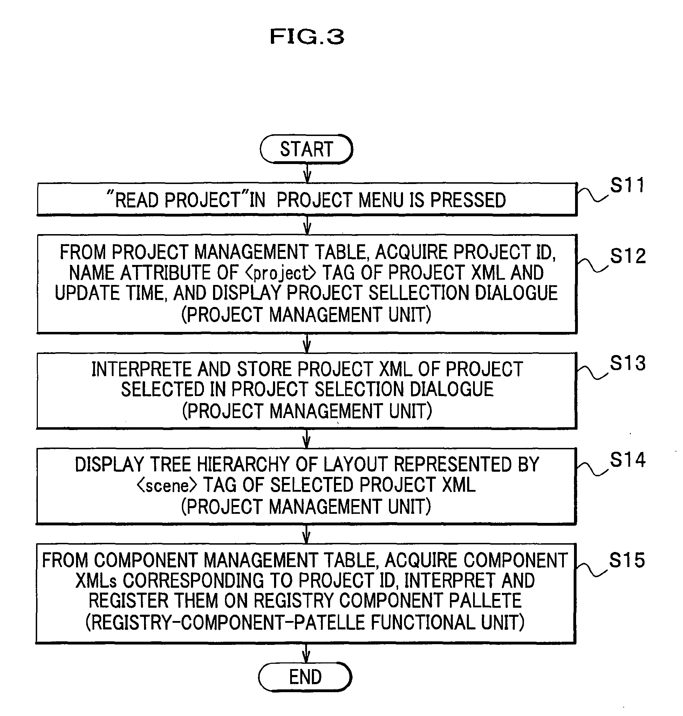

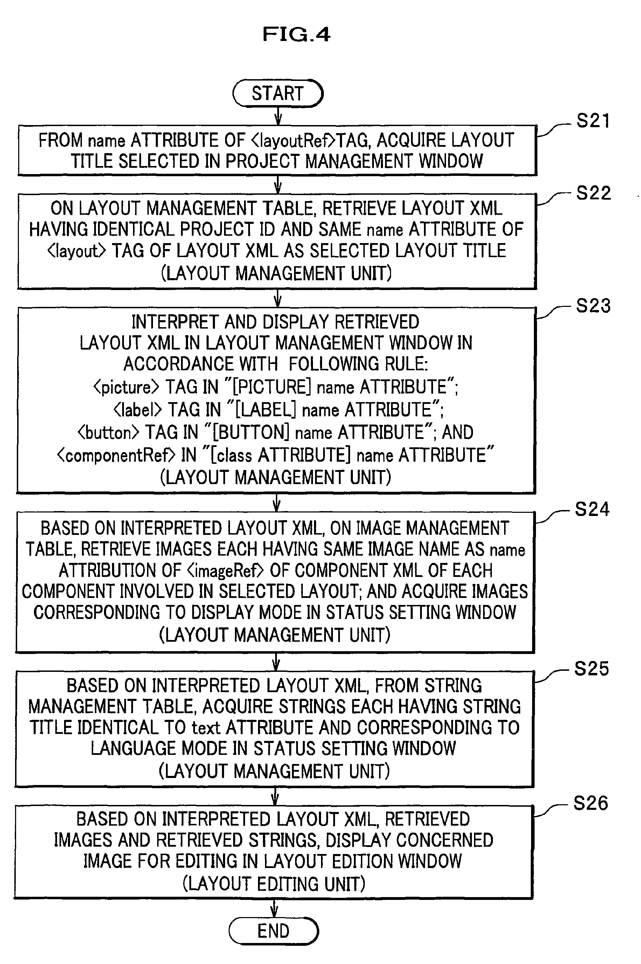

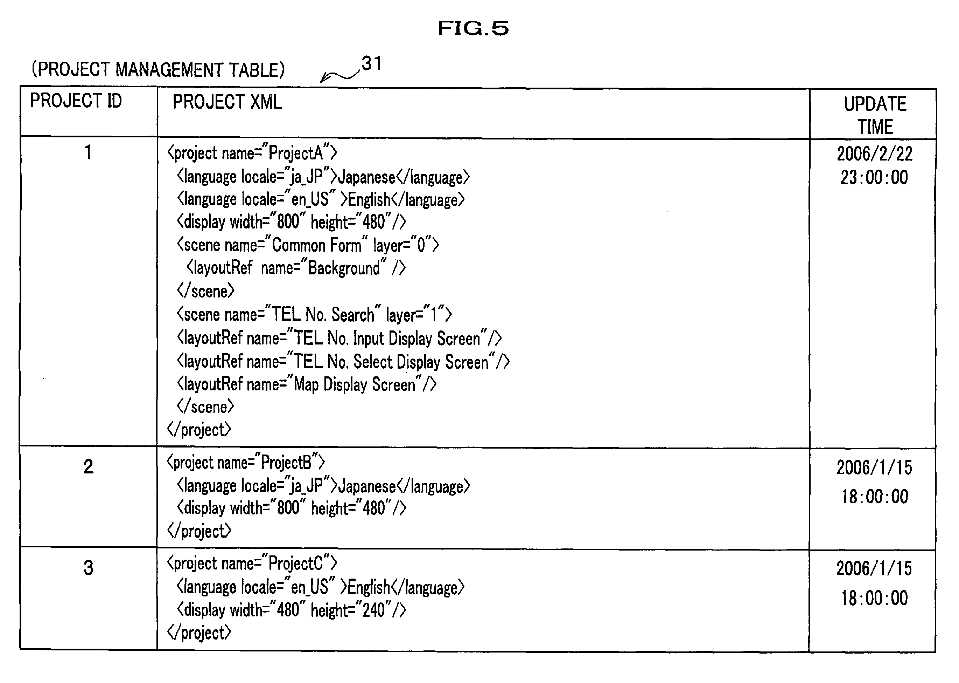

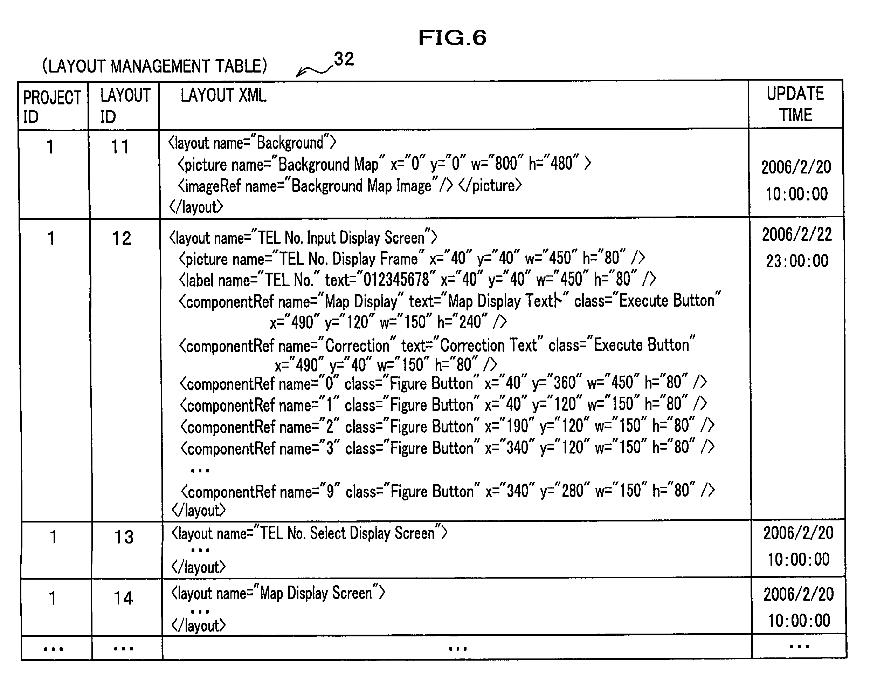

With reference to Figs. 2 to 9, examples of operations of the layout editor 20 will be described. Fig. 2 shows an example of a display screen image that the layout editor 20 displays. Figs. 3 and 4 show process flows of the layout editor 20. Figs 5 to 9 show an example of each structure of the project management table 31, the layout management table 32, the component management table 33, the image management table 35 and the string management table 34.

As shown in Fig. 2, when the layout editor 20 is activated, a display screen image 4 is displayed on the display unit of the HMI development support apparatus 1, for example. On the display screen image 4, a menu bar 41 and a layout edition window 45 are displayed, and a primitive component palette 46 and a registry component palette 47 are displayed when necessary. Herein, the primitive components (also refers to as "graphic components") denote components in which only basic information on outline and size is predetermined (also refers to as "graphic data"), and the registry components (also refers to as "image components") denote components including images of bitmap data and the like, in which the above primitive components are provided with aesthetic designs (also refers to as "image data").

On the layout edition window 45, a display screen image for the in-car navigation system is displayed as a concerned layout for editing, for example. Specifically, a user appropriately lays out components displayed on the primitive component palette 46 or the registry component palette 47 in the layout edition window 45, so as to create a concerned display screen image.

The project management window 42 and the layout management window 43 are displayed for selecting the concerned layout for editing. A status setting window 44 is a window for setting a display mode for the concerned layout for editing that are displayed in the layout edition window 45. In the present embodiment, for example, day image and night image are prepared and languages in Japanese and English are also prepared in a same layout; the present invention is not limited thereto, though.

Next, with reference to Figs 3 and 4, there will be given a description on the process flow of the layout editor 20 until the display screen image of Fig. 2 is displayed.

The layout editor 20 displays the menu bar 41 as shown in the display screen image 4 (see Fig. 2) when executing the program thereof. When the user selects "Project" in the menu bar 41, a project menu 411 is displayed.

As shown in Fig. 3, when receiving a user's input of a pressed "Read Project" in the project menu 411 (S11), the layout editor 20 (project management unit 21) acquires an appropriate project ID and a "name" attribute of a <project> tag of a project XML corresponding to the project ID as well as its update time from the project management table 31 (Fig. 5).

The layout editor 20 (project management unit 21) interprets and stores the corresponding project XML of the project that the user has selected ("Project A" is selected in Fig. 2, for example) in a project selection dialogue (not shown in Fig. 2) displayed (S13). Then, the layout editor 20 (project management unit 21) displays a tree-hierarchy of the layout represented by <scene> tags of the concerned project XML on the project management window 42 (see Fig. 2) (S14).

Next, the layout editor 20 (registry-component-palette functioning unit 25) acquires component XMLs that are corresponding to the project ID of the selected project ("Project A", for example), interprets the component XMLs, and then registers them on the registry component palette 46 (S15). In the present embodiment, the components displayed on the registry component palette 46 are limited to those that are used only for the selected project from all the components registered on the component management table 33. However, it may be configured to display all the components registered on the component management table 33.

In Fig. 3, although the functional blocks are described as if they are a subject of the operation, the actual subject of the operation is the CPU that executes the programs. In the descriptions of the embodiment, the functional blocks are represented as a subject of the operation for the sake of illustrating which functional block is currently executed by the CPU, just for convenience.

As shown in Fig. 4, on the project management table 31 (see Fig. 5), the layout editor 20 acquires a layout title that the user has selected in the project management window 42 ("TEL No. Input Display Screen" in Fig. 2, for example) from a name attribute having the same layout title of <layoutRef> tags of the selected project XML (see Fig. 5) (S21).

Next, on the layout management table 32 (see Fig. 66), the layout editor 20 (layout management unit 22) retrieves layout XML having the identical project ID and the same name attribute a <layout> tag of the layout XML as the selected layout title. (S22).

The layout editor 20 (layout management unit 22) interprets the layout XML including the retrieved name attribute of and displays it in a tree view in accordance with the following rule (S23): a <picture> tag is displayed in a "[Picture] name attribute"; a <label> tag is displayed in a "[Label] name attribute"; a <button> tag in a "[Button] name attribute"; and <componentref> in a "[class attribute] name attribute".

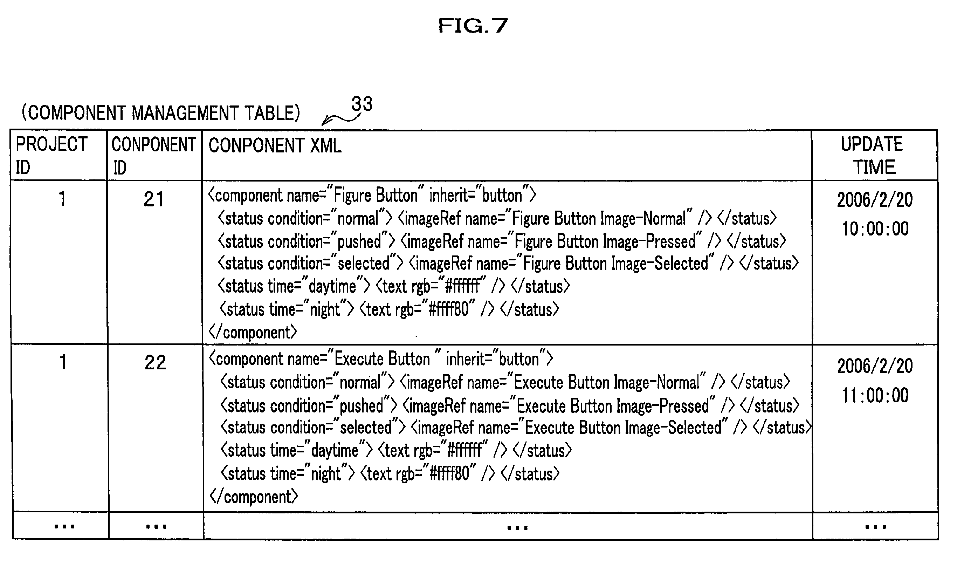

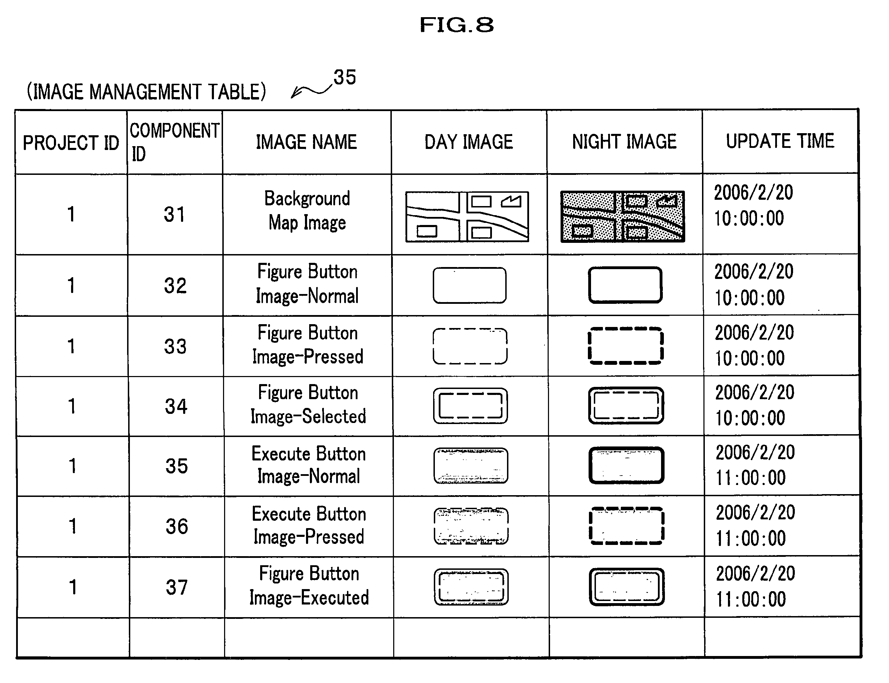

Then, based on the above interpreted layout XML, the layout editor 20 (layout management unit 22) retrieves, on the image management table 35 (see Fig. 8), images each having a same image name as a name attribution of a <imageRef> of a component XML corresponding to each component included in the concerned layout (see the "component management table 33" of Fig. 7), and acquires images corresponding to a display mode ("Day " in Fig 2, for example) in the status setting window 44 (see Fig. 2) from these retrieved images (see Fig. 2) (S24).

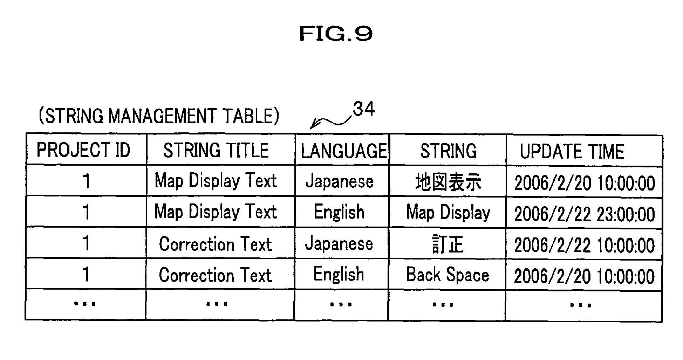

Thereafter, based on the above interpreted layout XML, on the layout management unit 22, the layout editor 20 acquires strings each having an string title identical to a text attribute and corresponding to the language mode in the status setting window 44 from the string management table 34 (see Fig. 9) (S25). Furthermore, based on the interpreted layout XML, the retrieved images and the retrieved strings, the layout editor 20 (layout management unit 22) displays a concerned image for editing in the layout edition window 45 (see Fig. 2) (S26).

At this time, it is assumed that a status in the status setting window is set in either a predetermined status as a default or a status that has been predefined by the user. Fig. 2 shows an example of the layout edition window 45 displaying a TEL No. input display screen in which the display mode is selected as "Day" and the language mode is selected as "English".

In this way, the edition display screen of "TEL No. Input Display Screen" is displayed in the layout edition window 45. In the above description, image data of the TEL No. display component (45a in the layout edition window 45) of the TEL No. input display screen image have not been registered yet. Thereinafter, a description will be given on how to edit the image data of the TEL No. input display component (a TEL No. input display frame and a TEL No. string displayed in this frame) and register it by using the image editor 10.

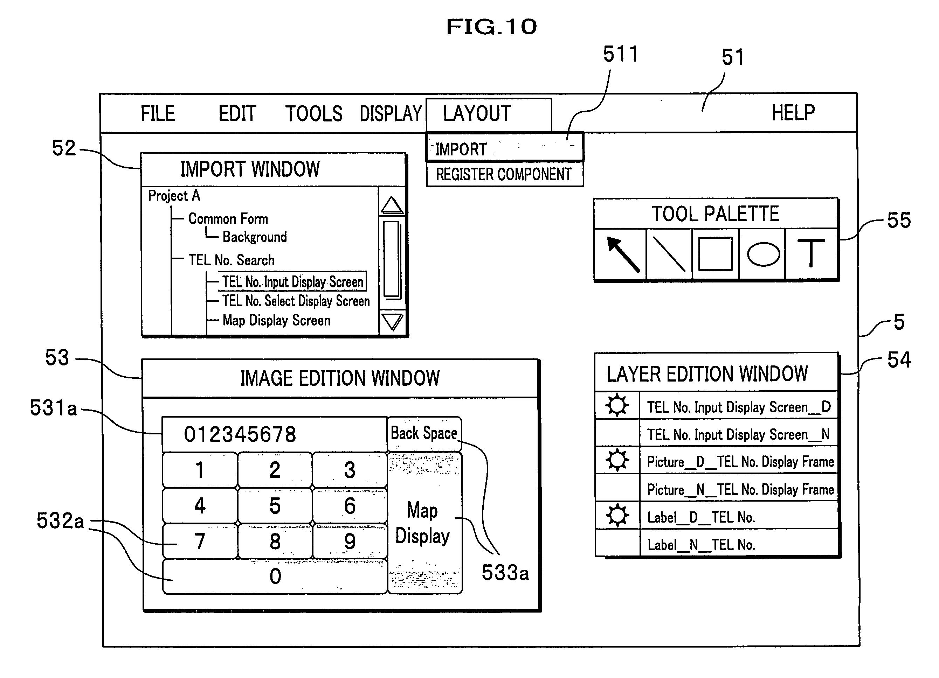

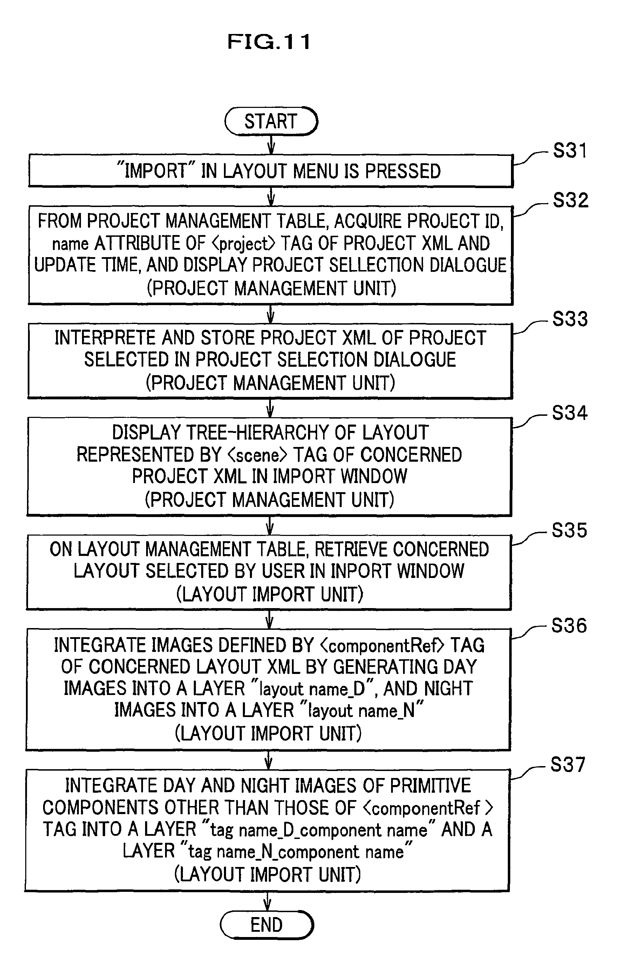

Fig. 10 is a view showing an example of a display screen image in a layout import process that the image editor 10 displays. Fig. 11 is a view showing an example of a flow of the layout import process on the image editor 10.

As shown in Fig. 10, when the image editor 10 is activated, a display screen image 5 is displayed on the display unit of the HMI development support apparatus 1. On this display screen image 5, the menu bar 51 and the image edition window 53 are displayed, and the import window 52, the edition window 54 and the tool palette 55 and the like are displayed when necessary. In the image edition window 53, image data of the concerned layout for editing is displayed. The concerned layout for editing is selected in the import window 52. In the example of Fig. 10, it should be understood that the concerned layout for editing is "TEL No. Input Display Screen", which is a masked item of Fig. 10.

The image editor 10 displays the menu bar 51 as shown in the display screen image 5 (see Fig. 10) when executing the program thereof. The user selects "Layout" in the menu bar 51, and then, the layout menu 511 is displayed.

As shown in Fig. 11, receiving a user's input of a pressed "Import" in the layout menu 511, the image editor 10 (project management unit 21) acquires a concerned project ID and a name attribute of a <project> tag of a corresponding project XML and a corresponding update time and display the project selection dialogue (not shown in Fig. 10) (S32). Although the project management unit 21 is included in the layout editor 20, herein the process is performed in accordance with instructions from the image editor 10.

Next, the image editor 10 (project management unit 21) interprets the project XML of the project selected by the user ("project A" is selected in Fig. 10) in the project selection dialogue and stores it (S33). The image editor 10 (project management unit 21) displays a tree-hierarchy of the layout represented by <scene> tag of the concerned project XML in the import window 52 (see Fig. 10).

Next, the image editor 10 (layout import unit 14) retrieves the concerned layout selected by the user in the import window 52 on the layout management table 32 (S35). In the example of Fig. 10, it is assumed that the concerned layout that has been selected is "TEL No. Input Display Screen" (meshed item in the import window 52). At this time, the layout of "TEL No. Input Display Screen" includes not only the TEL No. display-component for image editing (see 531a of the image window 53) but also figure buttons (see 532a) and execution buttons (see 533a).

Then, the image editor 10 (layout import unit 14) integrates the images defined by a <componentRef> tag of the concerned layout XML such that day images thereof are generated into a layer with a file name of "layout name_D" and night images thereof are generated into a layer with a file name of "layout name_N" (S36). Furthermore, the image editor 10 (layout import unit 14) integrates day images and night images of the primitive components other than those defined by the <componentRef> tag into a layer with a file name of "tag name_D_component name" and a layer with a file name of "tag name_N_component name", respectively (S37).

In this way, the image editor 10 imports a layout of a display screen image that has been created by the layout editor 20. What the user has to do for performing the above process is almost the same when activating the layout editor 20, which is to select the concerned project and the display screen image used in this project. This means that the operation for importing the layout of the display screen image is very simple for a user, therefore, even if users of the image editor 10 and the layout editor 20 are different, mismatching or errors seldom occur therebetween.

In the present embodiment, when importing the display screen layout, the image editor 10 integrates multiple layers each of which is defined for each component included in the concerned layout for editing into one layer as the image data for the entire concerned layout for editing on the basis of the same layer name. In a specific example of the present embodiment, individual image data of the components have both a day image layer and a night image layer, and the individual image data of the layers of those components included in the concerned layout for editing are integrated and converted into two image data having the day image layer and the night image layer. Accordingly, it is possible to reduce the number of layers of the image data included in the concerned layout for editing, compared to maintaining individual layers of those involved therein, which results in reduction in processing load on the computer.

In the above specific descriptions on the present embodiment, although integrating image data of layers is carried out on the basis of day and night images, this may be carried out on the basis of another mode such as a language mode between Japanese and English, for example. The present invention is not limited to the above specific examples, and layer type for integrating image data may be appropriately selectable.

After the image editor 10 completes the importing process of the concerned layout for editing, as described above, the image editor 10 displays the image of the imported layout in the image edition window 53 and the layer edition window 54 in which a concerned layer for editing of the imported layout is specified. The tool palette 55 shown in Fig. 10 is equivalent to a general one incorporated in a general image editor.

In a state of the image edition window 53 in Fig. 10, the TEL No. display frame 531 is a graphic component constituted only by primitive components, which is not a registry component having image data whose image has been edited. Hence the input device, the design tool of the tool palette 55 and the like of the HMI support apparatus 1 are used so as to graphically edit the TEL No. display frame 531. It should be noted that the user may modify image data of the registry components and add new image data thereto.

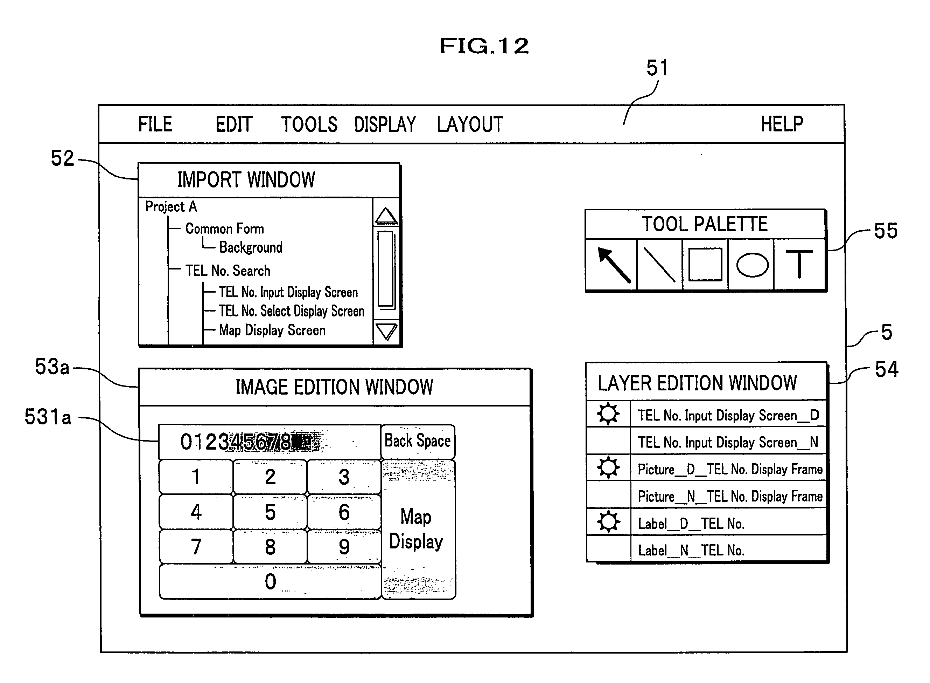

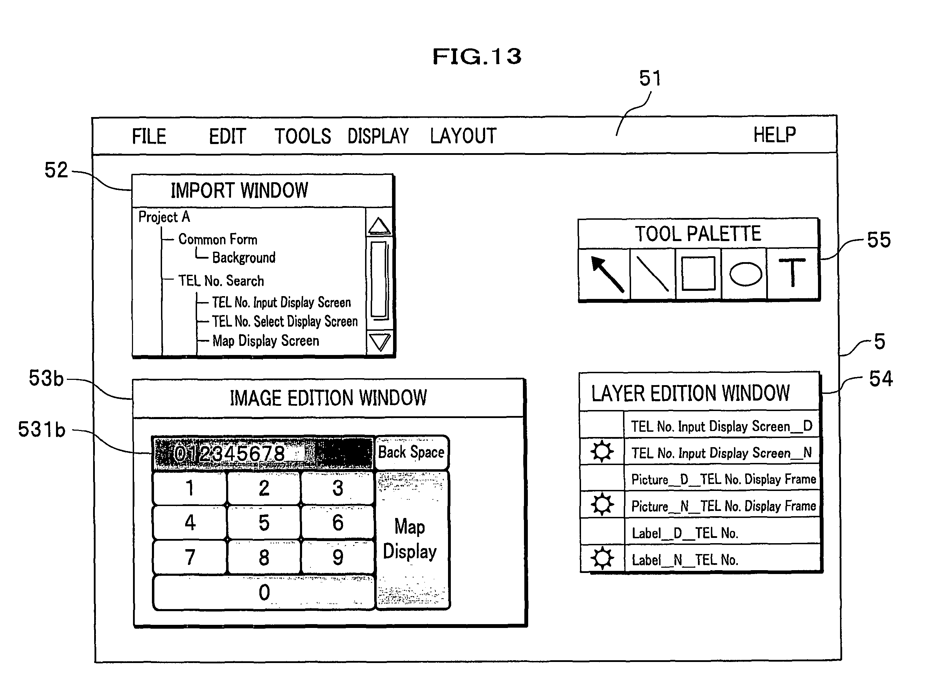

Figs. 12 and 13 show examples of a display screen of the day image and a display of the night image of "TEL No. Input Display Screen" that has been designed by a graphic designer. As shown in Figs. 12 and 13, the images of the TEL No. display frames for the day image and the night image 531a, 531b are separately designed while the graphic buttons and the execute button are also displayed during editing the images. Therefore, the graphic designer can edit an image of the component with taking an account of other components laid out around the component being edited.

Thereafter, the image editor 10 registers the image-edited component (TEL No. display frame 531 in Figs. 12, 13, for example) on the component management table 33.

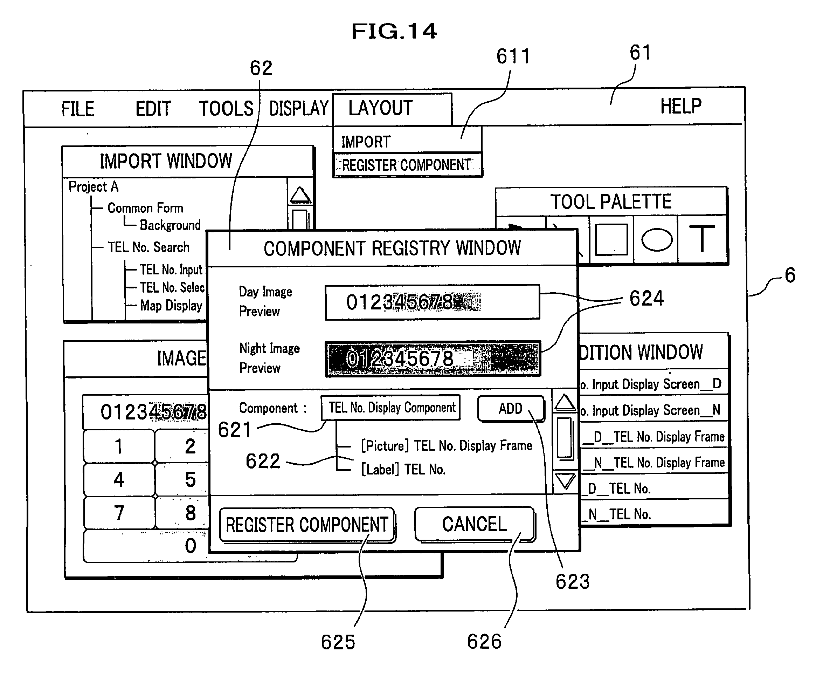

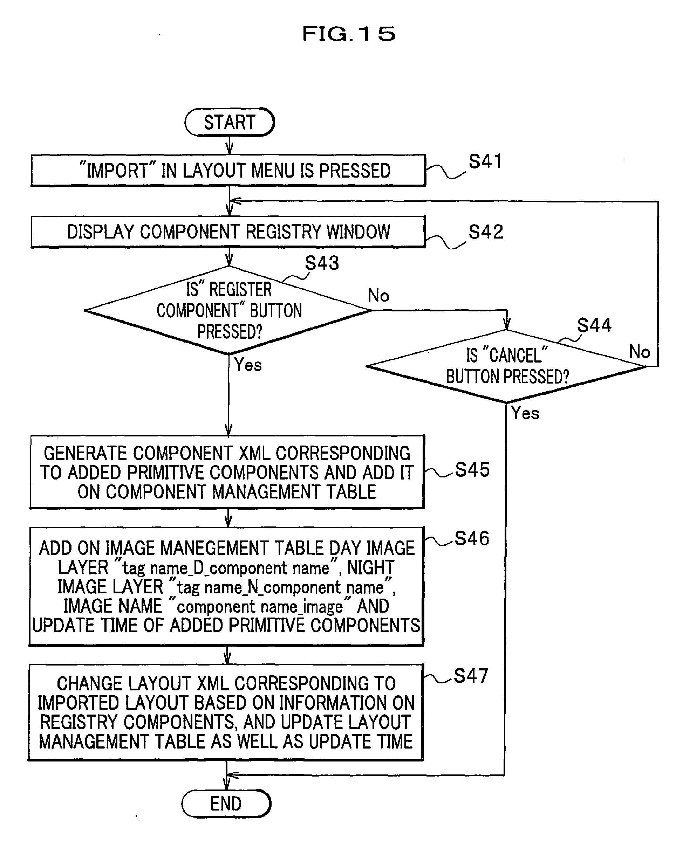

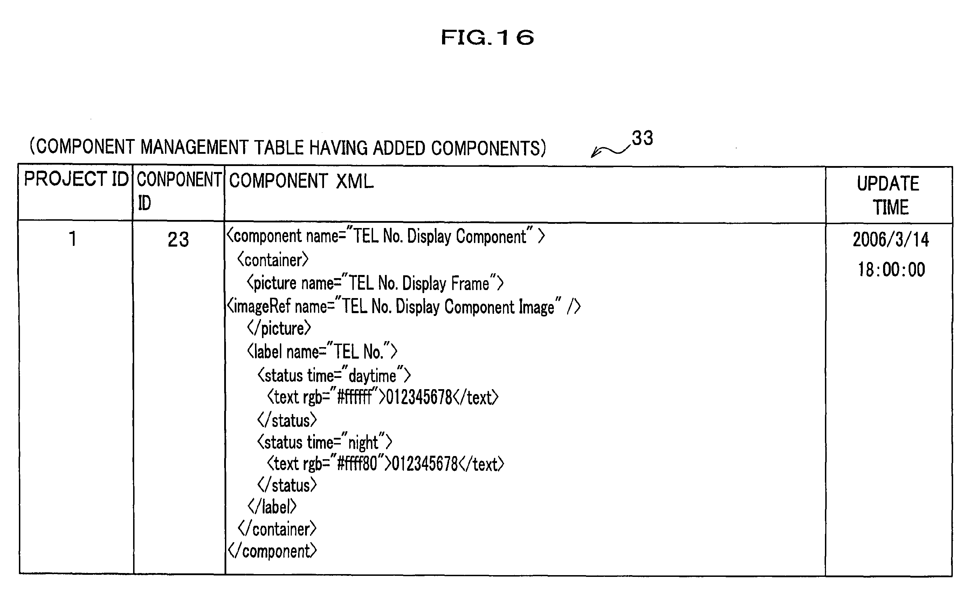

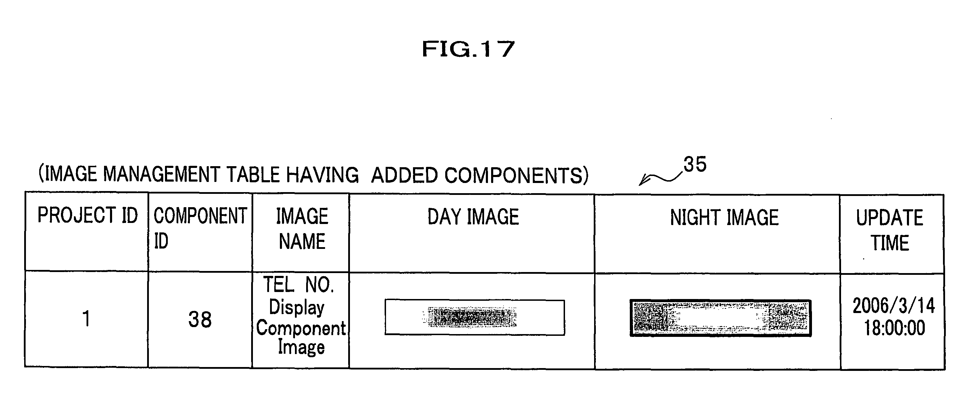

Fig. 14 shows an example of the component registry window that the image editor 10 displays in the component registry process, and Fig. 15 shows an example of a flow of this component registry process on the image editor 10. Fig. 16 shows an example of the component management table 33 on which the image-edited component has been added in the component registry process, and Fig. 17 shows an example of the image management table 35 on which the image-edited component has been added in the component registry process.

On the display screen of Fig. 14, the user selects "Layout" of the menu bar 61 and then click on "Register Component" of the layout menu 611 that is displayed when the user selected the "Layout", so as to register the image-edited component (note: component registry window 62 is not displayed at this time).

Specifically, as shown in Fig. 15, when receiving a user's input of the pressed "component registry" in the layout menu 611 (S41), the image editor 10 (component registry unit 15) displays the component registry window 62 (see Fig. 14) (S42). In the component registry window 62, as shown in Fig. 14, there are provided an input field 621 for a component name and a add button 623 for adding primitive components that constitutes the image-edited component. The user inputs a component name for the image-edited component in the input field 621 and adds the primitive components constituting the concerned component by the add button 623, whereby a tree hierarchy 622 of the concerned component as well as previews 624 of a day image and a night image thereof.

In the component registry window 62, there are provided a component registry button 625 and a cancel button 626. When receiving a user's input of a pressed component registry button 625 (Yes at S43), the image editor 10 (component registry unit 15) generates component XML corresponding to the added primitive components of the image-edited component and adds it on the component management table 33 (S45). An example of the component management table 33 on which these primitive components have been added is shown in Fig. 16.

Next, the image editor 10 (component registry unit 15) adds on the image management table 35 a day image layer with a file name of "tag name_D_component name", a night image layer with a file name of "tag name_N_component name", an image name with a file name of "component name_image" and an update time thereof that are corresponding to the added primitive components (S46). An example of the image management table 35 on which those primitive components has been added is shown in Fig. 17. The image editor 10 (component registry unit 15) changes the layout XML corresponding to the above-imported layout based on information on the registry components, and updates the layout management table 32 as well as the update time (S47).

When receiving not a user's input of the pressed component registry button 625 (No at S43) but of a pressed cancel button 626 (Yes at S44), the image editor 10 terminates the process without executing the component registry process of S45 to S47. When receiving neither the pressed component registry button 625 nor the pressed cancel button 626 (No at S44), the image editor 10 stays in a stand-by mode until a user's input of either the pressed component registry button 625 or the pressed cancel button is received.

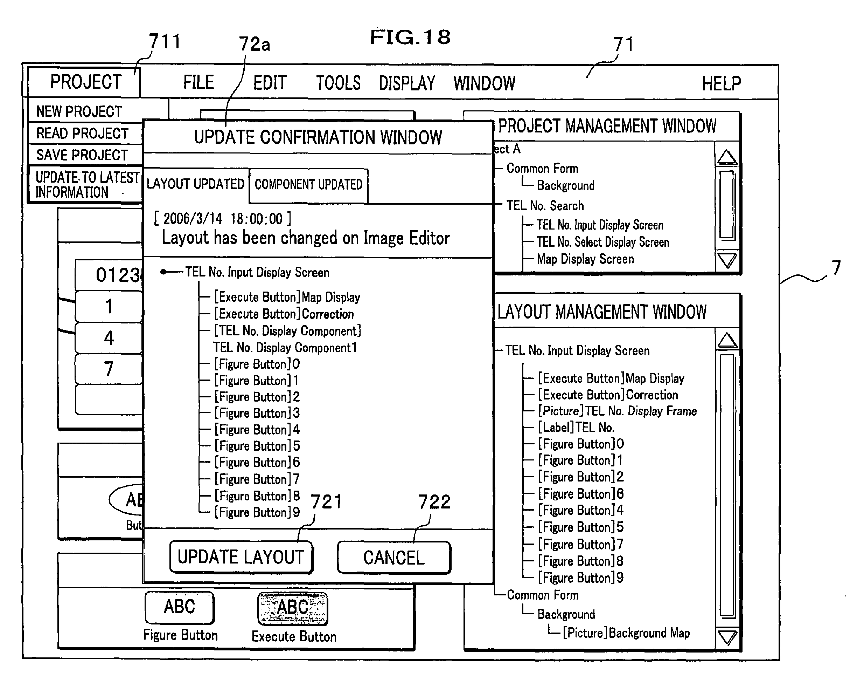

Thereafter, the image editor 10 completes the process of image editing for the concerned component by using the image editor 10. Then, when the image-edition of the concerned component is completed, the layout editor 20 provides a confirmation that the layout and the component have been updated, and then updates the display screen image 4 (see Fig. 2) on which the layout is currently being edited, as described in Figs. 18 to 21.

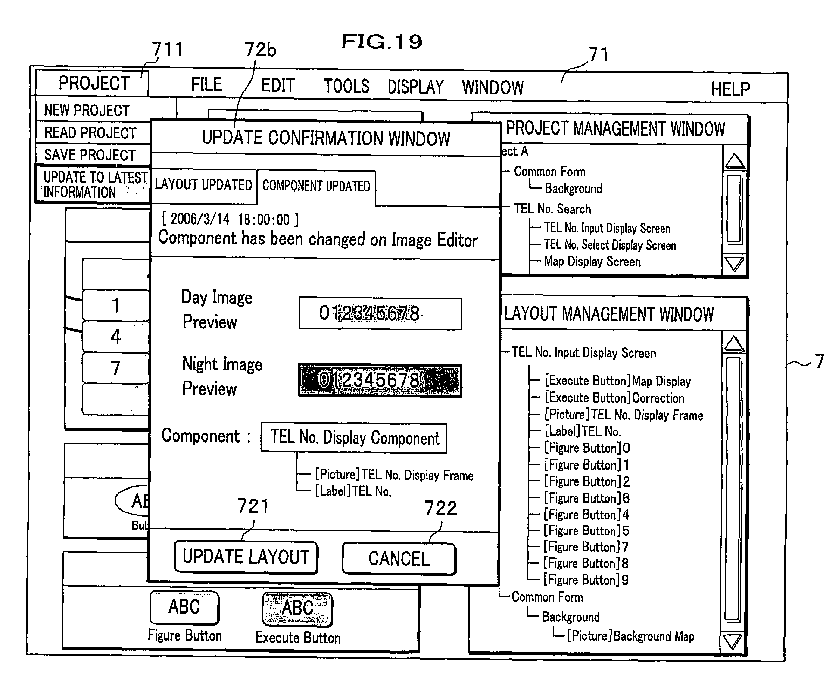

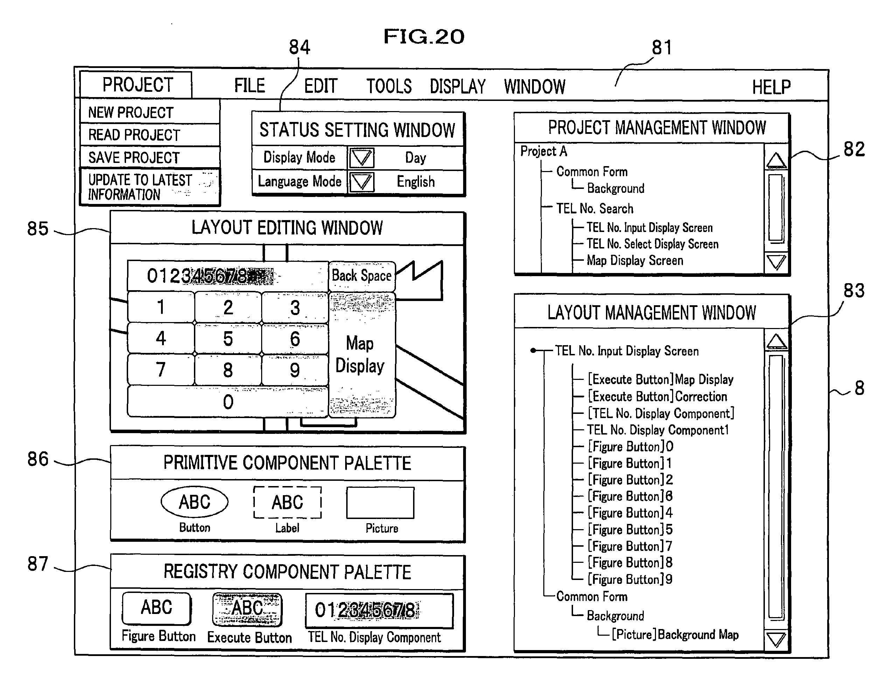

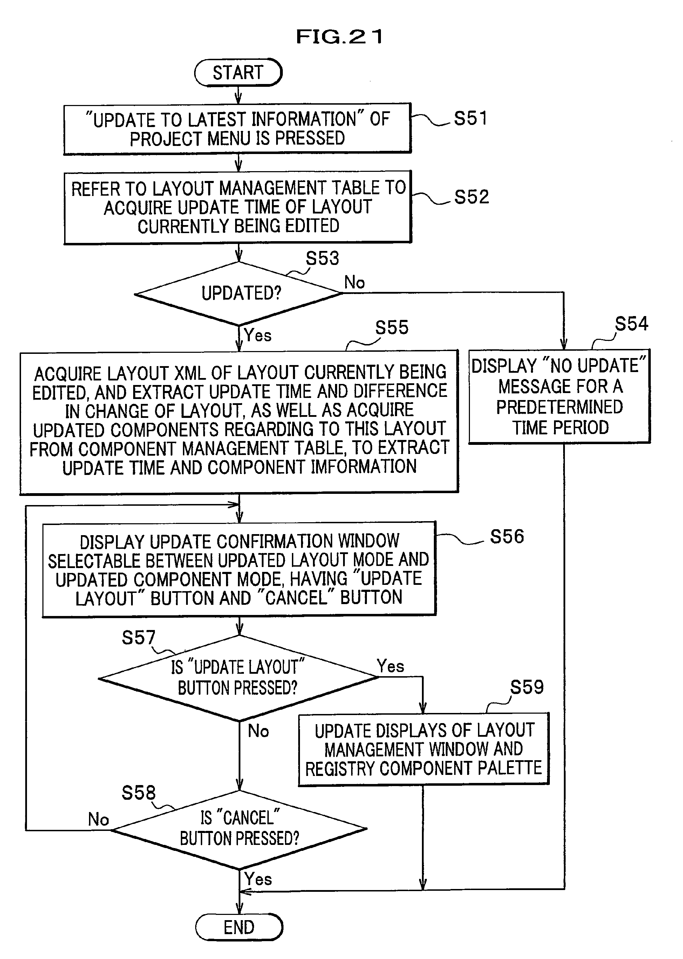

Fig. 18 shows an example of an update confirmation window 72a for confirming that the layout has been updated on the layout editor 20, and Fig. 19 shows an example of an update confirmation window 72b for confirming that the component has been updated on the layout editor 20. Fig. 20 shows an example of a display screen image that is displayed by the layout editor 20 after the above-mentioned confirmations of the updates are made. Fig. 21 shows an example of a flow of an update confirmation process on the layout editor 20.

As shown in Fig. 21, the layout editor 20 starts the update confirmation, and when receiving a user's input of a pressed "Update to Latest Information" of the project menu 711 as displayed in the display screen 7 (see Fig. 18) on which the concerned layout is currently being edited (S51), the layout editor 20 refers to the layout management table 32 so as to acquire the update time of the concerned layout currently being edited (S52). Then, the layout editor 20 compares the acquired update time to the previous update time of the concerned layout, thereby to determine whether or not the concerned layout currently being edited has been updated (S53).

If it is determined that the concerned layout has been updated (Yes at S53), the layout editor 20 (information update unit 26) acquires the layout XML of the concerned layout currently being edited from the layout management table 32, and extracts the update time and a difference in change of the layout, as well as acquires the updated components regarding to this concerned layout from the component management table 33, so as to extract the update time and the component information (S55).

Next, the layout editor 20 (information update unit 26) displays the update confirmation window 72a (72b) (see Figs. 18, 19) that is selectable with tabs between an updated layout mode and an updated component mode, and has an update layout button 721 and a cancel button 722 (S56). When receiving a user's input of a pressed update layout button 721 (Yes at S57), the layout editor 20 (information update unit 26) updates displays of the layout management window 83 and the registry component palette 87 as shown in the display screen 8 (see Fig. 20) (S59). An example of the display screen after being updated is shown in Fig. 20.

Of the display screen image 8 in Fig. 20, other than the updated layout management window 83 and the updated registry component palette 87, the menu bar 81, the project management window 82, the status setting window 84, the layout editing window 85 and the primitive component palette 86 are respectively corresponding to the menu bar 41, the project management window 42, the status setting window 44, the layout editing window 45 and the primitive component palette 46 of the display screen image 4 in Fig. 2.

When receiving not the user's input of the pressed update layout button 721 (No at S57) but of the pressed cancel button 722 (Yes at S58), the layout editor 20 (information update unit 26) terminates the process without executing the step at S59. If neither the user's input of the pressed update layout button 721 nor of the pressed cancel button 722 is received, the layout editor 20 stays in a standby mode while the update confirmation windows 72a, 72b are displayed until the pressed update layout button 721 or the pressed cancel button 722 are input.

If it is determined that the concerned layout is not updated (No at S53), the layout editor 20 (information update unit 26) displays a message "No Update" on the display screen for a predetermined time period (S54), and then terminates the process.

As described above, if newly image edited images of a component are added to the layout image that has been imported, the image editor 10 registers image data of the newly image-edited images of the component in the component management table 33 and the image management table 35 of the resource management DB 30, and also updates information regarding the concerned layout (i.e. imported layout) stored in the layout management table 32, in accordance with the newly image-edited component. Meanwhile, the layout editor 20 can acquire the image data that has been image-edited for the concerned layout simply by confirming the update thereof in the layout management table 32.

Accordingly, the user of the layout editor 20 can acquire the image data that have been image-edited for the concerned layout and other image data of components that are used for the concerned layout in a simple operation. As mentioned above, in the light of such simplicity of the import operation to import the concerned layout from the layout editor 20 into the image editor 10, it is obvious that operational compatibility between the layout editor 20 and the image editor 10 is enhanced, thereby to significantly enhance the operational performance compared to that in the prior art. Accordingly, the HMI development support apparatus 1 according to the present embodiment of this invention reduces implementation time in a HMI development, that is, reduces HMI implementation cost that is mostly spent on personnel expenses.

According to the present invention, operational compatibility between a layout editor and an image editor is enhanced, and it is possible to reduce implementation cost in a HMI development.

## Claims

1. A HMI (Human Machine Interface) development support apparatus that includes at least a CPU (Central Processing Unit), memory devices, a display unit and an input device and supports development of a display screen regarding a HMI of an information processing system,
the apparatus comprising:
a layout editing means (20) that creates a layout of the display screen regarding the HMI of the information processing system in such a manner that the layout editing means lays out at least either a graphic component having graphic data or an image component having image data based on operational information input from the input device;
an image editing means (10) that creates an image for either the graphical component or the image component based on the operational information input from the input device; and
data storage means (30) that stores layout data of the layout created by the layout editing means, component data of components included in the layout and image data of the components,
the image editing means (10)
importing the layout data of the layout that is created by the layout editing means (20) and that is stored on the data storage means (30);
creating image data of a component whose component data included in the imported layout data, based on operational information that is input from the input device when necessary; and
storing the created image data of the component that is stored on the data storage means (30) and updating the layout data and the component data that are stored on the data storage means (30).

2. A HMI development support apparatus according to Claim 1, wherein
the image editing means (10):
acquires from the data storage means (30) the image data of the components whose component data are included in the imported layout data;
getting together each acquired image data of the components so as to create image data for the entire layout; and
displays the created image data for the entire layout on the display unit.

3. A HMI development support apparatus according to Claim 1 or 2, wherein
images of the components whose component data are included in the imported layout data are constituted of multiple layered images, and
the image data of the components include a layer name and image data of each layer of the images,
the image editing means (10):
when importing the layout data of the layout, extracting image data of layers having the same layer name from the image data of the components included in the layout;
integrating the extracted image data of the layers having the same layer name, so as to create an integrated image data of the entire layout for each layer having the same name; and
displaying the integrated image data of the entire layout for each layer.

4. A HMI (Human Machine Interface) development support method for a HMI development support apparatus that includes at least a CPU (Central Processing Unit), memory devices, a display unit and an input device and that supports development of a display screen regarding a HMI of an information processing system,
the method comprising:
a layout editing step of creating a layout of a display screen regarding the HMI of the information processing system in such a manner that the layout editing means lays out at least either a graphic component having graphic data or an image component having image data, based on operational information input from the input device;
an image editing step of creating an image of either the graphical component or the image component, based on operational information input from the input device; and
a data storing step of storing layout data of the layout created by the layout editing means, component data of components included in the layout and image data thereof,
in the image editing step,
importing the layout data of the layout that has been created and stored on the memory devices in the layout editing step;
creating image data of components whose component data are included in the imported layout data based on the operational information input from the input device when necessary; and
storing the created image data of the components on the memory devices and updating the layout data and the component data that have been stored on the memory devices.

5. A HMI development support method according to Claim 4, wherein
in the image editing step,
acquiring the image data of the components whose component data are included in the imported layout data from the memory devices,
getting together the acquired image data of the components so as to create image data for the entire layout, and
displaying the created image data for the entire layout on the display unit.

6. A HMI development support method according to Claim 4 or 5, wherein
images of the components whose component data are included in the imported layout data are constituted of multiple layered images, and the image data of the components include a layer name and image data of each layer of the images; and
in the image editing step,
when importing the layout data of the layout, extracting image data of layers having the same layer name from the image data of the components included in the layout;
integrating the extracted image data of the layers having the same layer name, so as to create an integrated image data for the entire layout for each layer having the same name; and
displaying the integrated image data for the entire layout for each layer.

7. A storage medium storing computer-readable programs that allows a computer to execute the HMI development support method according to one of Claims 4 to 6.
